# EUROPEAN PATENT SPECIFICATION

(11) **EP 2 520 824 B1**
(45) Date of publication and mention of the grant of the patent: **23.04.2014**
(21) Application number: 11183282.0
(22) Date of filing: 29.09.2011
(51) Int. Cl.: F16F 9/32

(54) **Mounting tool for assembling spring loaded shock absorbers**
Werkzeug zur Montage von Dämpfern mit Federn
Outils pur monter un amortisseur de chocs

(30) Priority: 06.05.2011 IT MO20110102
(43) Date of publication of application: 07.11.2012
(73) Proprietor: GO.VO.NI. S.R.L., 41124 Modena (IT)
(72) Inventor: Verrillo, Antonio, 40017 San Giovanni In Persiceto (Province of Bologna) (IT); Verrillo, Davide, 40019 SANT'AGATA BOLOGNESE BO (IT); Mitrati, Marco, 40017 SAN GIOVANNI IN PERSICETO BO (IT)
(74) Representative: Modiano, Micaela Nadia

(56) References cited:
- WO-A1-02/055819
- DE-B3- 10 334 034
- DE-U1- 29 801 172
- JP-A- 10 086 859
- US-A- 3 883 126
- US-A- 4 596 383

## Description

The present invention relates to a device for assembling shock absorbers, particularly for gas-assisted shock absorbers.

As is known, in motor vehicles the suspension system has a crucial role in road-holding, stability and comfort.

Indeed the aging or malfunction of the suspensions make the behavior of the vehicle unpredictable, rendering it unsafe.

Timely and correct maintenance of the suspension system is indispensable to ensure not only driving comfort but most of all the necessary safety that the car must have in order to protect the driver and the people being carried.

In particular, the suspension system comprises the use, in the automotive field, of shock absorbers composed of a piston and a stem, which can slide with respect to each other, the piston being inside the stem, in contrast with, and by means of the action of, a helical spring which is preloaded and interposed between them.

Both the piston and the stem are the elements with the highest degree of wear and accordingly their replacement is necessary in order to restore the efficiency of the entire suspension system.

This replacement can occur by means of devices of a known type which are indeed adapted for the disassembly of shock absorbers.

Such a device is known from the US 4 596 383.

These known types of device, by means of suitable grip means, make it possible to compress the helical spring, transferring its potential energy from the two free ends of the piston and of the stem to the disassembly device, allowing the disassembly of the two elements that mainly constitute the shock absorber.

Then, again with the spring compressed in the grip means, one proceeds with the assembly of a new piston within a new stem, interposing appropriately the helical spring, so as to restore the efficiency of the shock absorber and consequently the efficiency of the suspension system.

These devices of a known type are not free from drawbacks, including the fact that keeping the helical spring in a compressed state for a long time, defined between the step of disassembly of the components to be replaced and the step of assembly of the new components, can lead to a plastic deformation of the helical spring, altering its initial performance.

Another drawback of these known types of device resides in that the compression step of the helical spring is a step that is very dangerous for the operator, since the compressed helical spring is in a state of unstable equilibrium, in which unintentional impacts affecting the device might trigger unexpected oscillations in the helical spring, which by passing from a state of unstable equilibrium to a stable one releases its potential energy, exiting from the device and injuring the operator.

This situation is worsened if shock absorbers of the new generation with reduced space occupation are used, which in order to adapt to the tight spaces defined in the body of the car use helical springs with a small number of turns, with a variable pitch and with a conical geometry.

These helical springs, by not offering stable grip points for devices of the known type, increase the risks cited above.

In order to obviate these drawbacks, the operator tends to reduce the time required for the spring compression step, limiting it only to the step of disassembly of the two worn components, immediately returning the helical spring to an extended state in which the potential energy is nil.

The operator, in order to be able to reassemble the helical spring in an uncompressed state in which it is consequently longer than in the compressed state, then extends the piston and the stem with respect to each other to increase the distance between the opposite ends of the two coaxial cylinders until the length of the uncompressed spring is equaled, altering the internal pressure of the contained gas.

Consequently, once the two mutually coaxial cylinders have been extended, the operator is unable to keep them in a stable position due to the variation of the internal pressure, which attempts to return the piston to the initial stable position.

The operator thus finds himself working dangerously, since the extended shock absorber is in a state of unstable equilibrium which therefore cannot be controlled, since it is impossible to use clamping means to keep the two cylinders extended.

Indeed any clamping means interposed between the piston and the stem hinder the fitting of the helical spring on the two cylinders.

The aim of the present invention is to provide a device for assembling shock absorbers, particularly for gas-assisted shock absorbers, which obviates the drawbacks and overcomes the limitations of the background art, making it possible to avoid altering the performance of the helical spring of the shock absorbers.

Within this aim, an object of the present invention is to provide a device that makes it possible to work in complete safety, reducing to a minimum the step of compression of the helical spring of the shock absorbers.

Another object of the present invention is to provide a device that is capable of operating on shock absorbers with different types of helical springs.

This aim and these and other objects that will become better apparent hereinafter are achieved by a device for assembling shock absorbers, particularly for gas-assisted shock absorbers, characterized in that it comprises grip means associable with a free end of a piston which is inserted slidingly in a stem of a shock absorber for the protrusion of said piston from said stem in contrast with the action of the clamping fluid contained in said stem, being furthermore comprised means for clamping said piston with respect to said stem, said means being engageable with an end portion of said piston that has exited from said stem for the facilitated mounting of a helical spring on said shock absorber, said end portion being defined at the opposite end with respect to said free end.

Further characteristics and advantages of the present invention will become better apparent from the description of a preferred but not exclusive embodiment of a device for assembling shock absorbers, particularly for gas-assisted shock absorbers, illustrated by way of non-limiting example in the accompanying drawings, wherein:

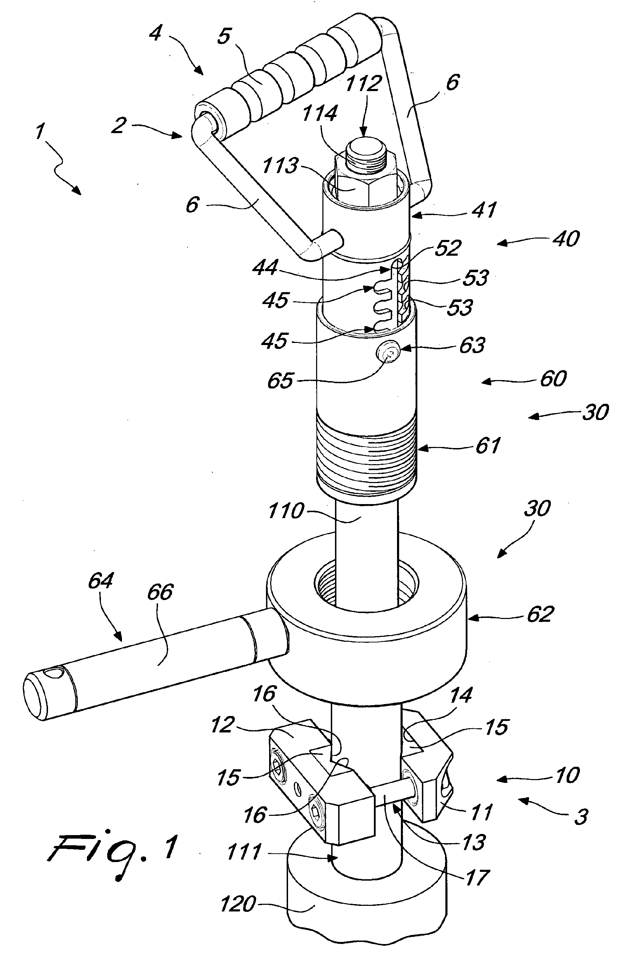

Figure 1 is a perspective view of the device for assembling shock absorbers, particularly for gas-assisted shock absorbers, according to the invention, during a step of installation on a piston;

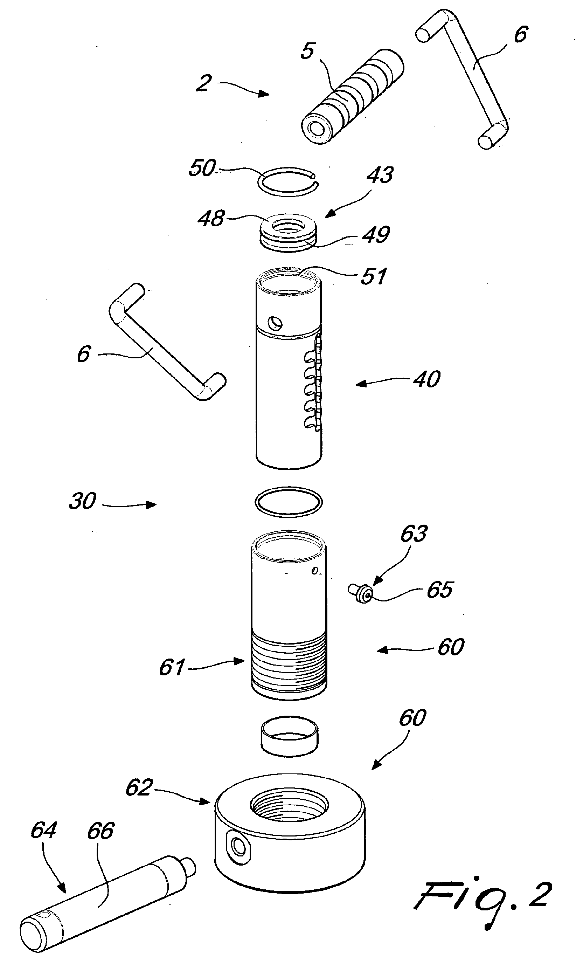

Figure 2 is an exploded perspective view of the device shown in Figure 1;
Figure 3 is a schematic view of the device shown in Figure 1 in retracted position fitted on a piston, according to the invention;
Figure 4 is a schematic view of the device shown in Figure 1 in extended position fitted on a piston, according to the invention;
Figure 5 is a schematic view of the extended piston shown in Figure 4, locked by a clamping ring, according to the invention;
Figure 6 is a schematic view of a shock absorber mounted on a suspension, according to the invention.

With reference to the figures, a device for assembling shock absorbers, particularly for gas-assisted shock absorbers, generally designated by the reference numeral 1, according to the invention, comprises grip means 2 which can be associated with a free end 112 of a piston 110, which is inserted slidingly in a stem 120 of a shock absorber 100 for the exit of the piston 110 from the stem 120.

In addition to the grip means 2, the device 1 comprises means 3 for clamping the piston 110 with respect to the stem 120, which can engage an end portion 111, which is opposite with respect to the free end 112 of the piston 110 that has exited from the stem 120 for the facilitated mounting of a helical spring 130 on the shock absorber 100.

Conveniently, the fastening means 3 comprise at least one clamping ring 10, which is defined by at least one first jaw 11 and one second jaw 12, which can be mutually coupled by means of locking means 13 in diametrically opposite positions with respect to the piston 110.

The first jaw 11 and the second jaw 12 surround the end portion 111 of the piston 110, touching it on opposite sides with a contact element 15 arranged on an internal face 14 of the jaws 11 and 12. Specifically, the contact element 15 is made of elastically flexible material.

In this particular embodiment, the first jaw 11 and the second jaw 12 are substantially U-shaped and have, in their recess, i.e., on the internal face 14, a portion of elastically flexible material 15, such as for example an acetic resin. The portion of elastically flexible material 15, particularly composed of polyoxymethylene, has two mutually inclined faces 16 for direct contact with the piston 110, so as to be able to offer at least two points of adhesion thereto. The first jaw 11 and the second jaw 12 are mutually coupled by means of threaded elements 17 of a known type, such as for example screws and respective bolts, where the length of the screws must be adequately sized with respect to the diameter of the piston 110, so that they are not too long as to protrude excessively from the jaws 11 and 12 but at the same time long enough to allow the connection of the two jaws 11 and 12 around the piston 110.

Advantageously, the grip means 2 comprise at least one grip element 4 which is associated detachably with the free end 112 for the extraction of at least one first portion of the piston 110 from the stem 120.

In particular, the extraction means 30 comprise a first hollow cylinder 40 and a second hollow cylinder 60, which are fitted over each other and in turn can be fitted over the piston 110.

Specifically, the first hollow cylinder 40 can be fixed to the piston 110 proximate to the free end 112 by means of engagement means 43 and the second hollow cylinder 60 can move, with respect to the first hollow cylinder 40, away from the free end 112 to pass from a retracted position to an extended position; in particular, in the extended position the first hollow cylinder 40 is spaced further from the clamping ring 10 with respect to the retracted position.

Moreover, the first hollow cylinder 40 is provided laterally with a sliding seat 44, which lies substantially parallel to the longitudinal axis of the first hollow cylinder 40 substantially along its entire length. The sliding seat 44 further comprises a plurality of holding seats 45 which are arranged transversely and are connected thereto.

In this particular embodiment, the grip element 4 is composed of a handle 5, which is pivoted to the lateral surface of the head end 41 by means of adapted arms 6, while the engagement means 43 comprise a ring 48 with an external circular groove 49 that accommodates a stop ring 50, which can engage in an abutment 51 provided internally in the head end 41. Furthermore, the sliding seat 44 is a straight slot 52 that is substantially parallel to the longitudinal axis of the first hollow cylinder 40 and has, in an alternating manner on the two opposite straight sides, a plurality of holding seats 45 composed of respective notches 53.

A holding element 63 is associated slidingly in the sliding seat 44 of the first hollow cylinder 40, is fixed laterally to the second hollow cylinder 60 and can engage temporarily in at least one of the holding seats 45.

If the piston 110 is not fully extended solely due to the use of the grip means 2, advantageously the device 1 comprises extraction means 30, which allow the extraction of a further second portion of the piston 110 from the stem 120, having at least one spacer ring 62 which is associated with the second hollow cylinder 60 by means of a screw-and-nut coupling to a base end 61 of the second hollow cylinder 60, which can be arranged proximate to the clamping ring 10. The spacer ring 62 is provided radially with at least one handling element 64.

In this particular embodiment, the second hollow cylinder 60, which has a tubular shape, is provided laterally with a grub screw 65, which is screwed so as to be able to slide within the straight slot 52 and the notches 53. Moreover, the spacer ring 62 screwed onto the external thread of the base end 61 has the handling element 64 defined by a grip 66 which is radially screwed to the spacer ring 62. In other embodiments, not shown in the accompanying figures, the possibility is not excluded to define the handling element 64 by using recesses or polygonal faces in which hexagonal keys or the like are coupled to be engaged radially with respect to the spacer ring 62.

Operation of the device for disassembling shock absorbers, particularly for gas-assisted shock absorbers, is described hereinafter.

The operator initially proceeds with the disassembly of the old shock absorber, compressing the helical spring 130, moving it to a compressed state and disengaging the two worn coaxial cylinders from it. After the disassembly step, the helical spring 130 is returned immediately to a state of stable equilibrium, i.e., with the spring not compressed.

Then the clamping ring 10 is arranged on the two new coaxial cylinders to be mounted on the shock absorber, on the end portion 111 of the piston 110, slightly screwing the locking means 13 so as to be able to allow the sliding of the piston 110 through the two connected jaws 11 and 12.

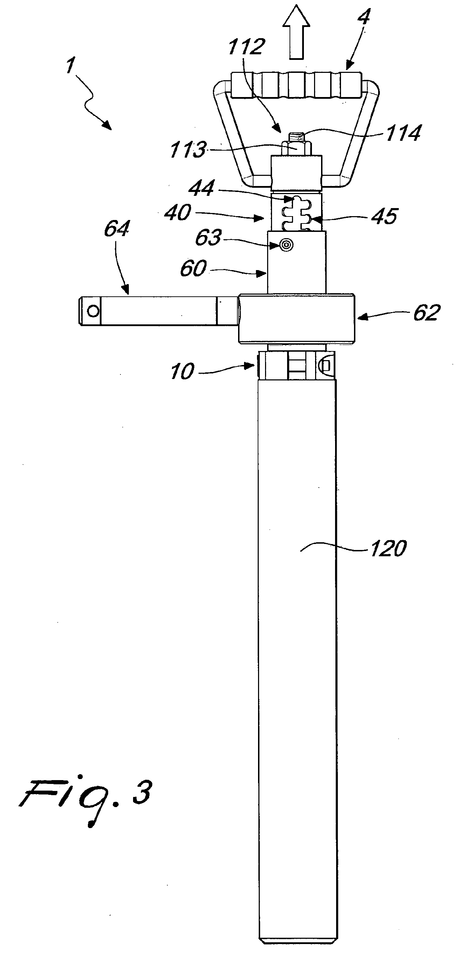

Consequently, the piston 110 is fitted with the extraction means 30 in retracted position, i.e., with the first hollow cylinder 40 almost completely inside the second hollow cylinder 60, engaging the free end 112 of the piston 110 with the head end 41 of the first hollow cylinder 40 by way of the engagement means 43, as shown in Figure 3.

In particular, the free end 112 has a threaded tip 114 which, once it has passed beyond the internal hole of the ring 48, is firmly anchored to the latter by an adapted bolt 113 of a known type.

Once the extraction means 30 have been anchored to the piston 110, one proceeds with an extension step of the extraction means 30 by means of the handle 5. During this step, the grub screw 65 slides along the straight slot 52.

The longer the extension of the extraction means 30, the greater the distance between the piston 110 and the stem 120 and consequently the contrast force offered by them.

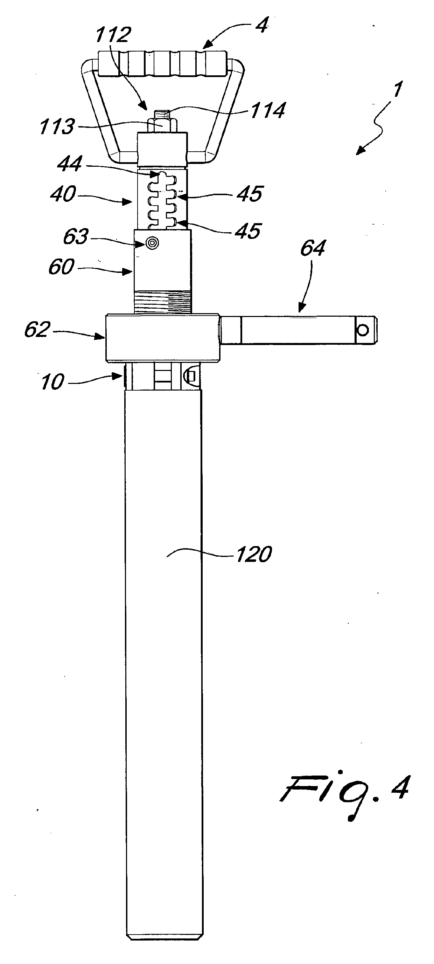

The extension step, which moves the extraction means 30 from an initial retracted position to a subsequent extended position, can be sustained by the muscular effort of the operator up to a specific spacing between the piston 110 and the stem 120; when this effort is no longer sustainable, the operator turns the handle 5 slightly so as to arrange the grub screw 65 in a lateral notch 53 for the temporary locking of the piston 110 with respect to the stem 120, as shown in Figure 4.

After the first extension step, the extension continues with a second step, in which the spacer element 62 is moved away from the second hollow cylinder 60 by means of the rotation thereof using the grip 66. Although the force required to space further the piston 110 from the stem 120 is greater, the transfer of the muscular effort from the preceding axial position by using the handle 5 is considerably reduced, due to the transfer of the radial effort by means of the use of a lever, i.e., the grip 66, which increases mechanically the applied axial force thereof.

Once the piston 110 has been fully extended, the threaded elements 17 that connect the jaws 11 and 12 located on the end portion 111 of the piston 110 are tightened so as to be able to prevent any movement of the piston.

As a consequence of this tightening, the extraction means 30 are disengaged from the piston 110, moving the spacer ring 62 closer again to the second hollow cylinder 60 and unscrewing the bolt 113 from the engagement means 43.

The outer space occupation of the clamping ring 10 is very limited, so much that it passes easily between the various turns of the helical spring 130.

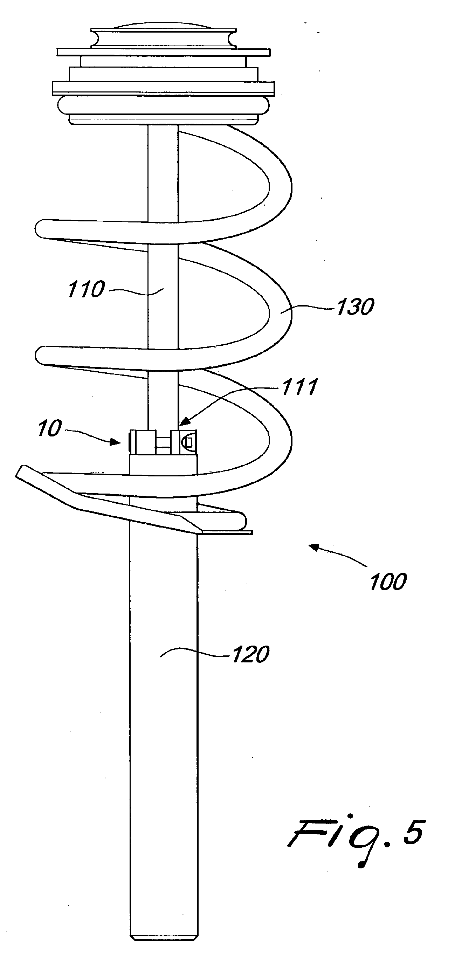

In this way, due to the complete extension of the piston 110 with respect to the stem 120, the helical spring 130 can be repositioned at the two ends of the two coaxial cylinders without compressing the helical spring 130, as shown in Figure 5.

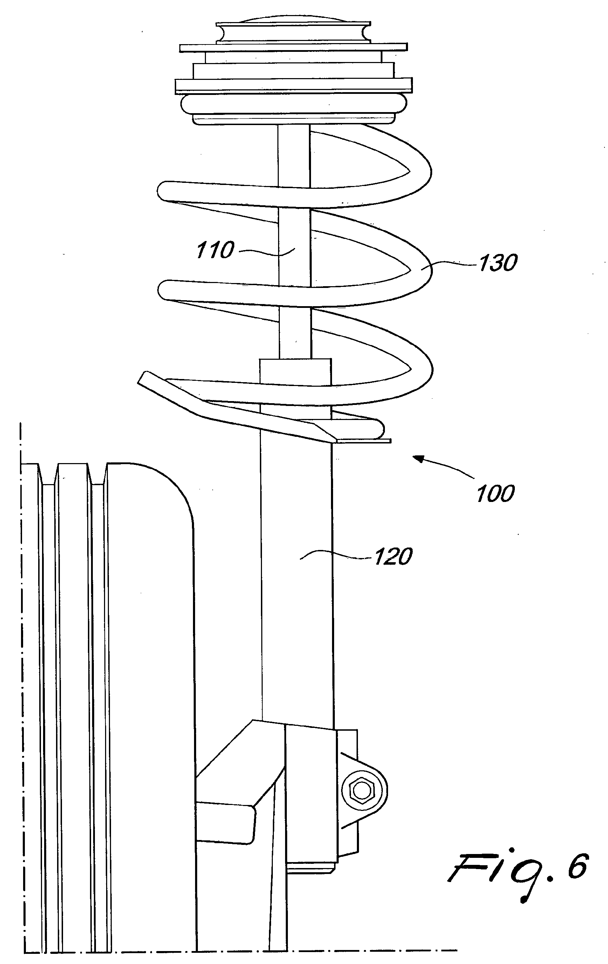

Finally, one proceeds with the unscrewing of the threaded elements 17 to disengage the clamping ring 10 from the piston 110, returning the shock absorber to the initial configuration for mounting on the suspension, as shown in Figure 6.

In practice it has been found that the device for assembling shock absorbers, particularly for gas-assisted shock absorbers, according to the invention, achieves the intended aim and objects, since it makes it possible to avoid altering the performance of the helical spring of the shock absorbers, minimizing the compression time of the spring.

Another advantage of the device according to the invention is that one works easily and in full safety, minimizing the step of compression of the helical spring of the shock absorbers.

A further advantage of the device according to the invention resides in that it can work on shock absorbers with different types of helical springs.

The device for assembling shock absorbers, particularly for gas-assisted shock absorbers, thus conceived is susceptible of numerous modifications and variations, all of which are within the scope of the appended claims.

All the details may further be replaced with other technically equivalent elements.

In practice, the materials used, so long as they are compatible with the specific use, as well as the contingent shapes and dimensions, may be any according to requirements.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A device (1) for assembling shock absorbers, particularly for gas-assisted shock absorbers, **characterized in that** it comprises grip means (2) associable with a free end (112) of a piston (110) which is inserted slidingly in a stem (120) of a shock absorber (100) for the protrusion of said piston (110) from said stem (120) in contrast with the action of the damping fluid contained in said stem (120), and comprising furthermore means (3) for clamping said piston (110) with respect to said stem (120) engageable with an end portion (111) of said piston (110) that has exited from said stem (120) for the facilitated mounting of a helical spring (130) on said shock absorber (100), said end portion (111) being defined at the opposite end with respect to said free end (112).

2. The device (1) according to claim 1, **characterized in that** said grip means (2) comprise at least one grip element (4) engageable with said free end (112) for the extraction of said piston (110) from said stem (120) at least for a first portion.

3. The device (1) according to claim 1 or 2, **characterized in that** it comprises means (30) for extracting said piston (110) from said stem (120) for extraction of said piston (110) from said stem (120) at least for a second portion.

4. The device (1) according to one or more of the preceding claims, **characterized in that** said extraction means (30) comprise a first hollow cylinder (40) and a second hollow cylinder (60), which are fitted over each other and can be.fitted over said piston (110), said first hollow cylinder (40) being fixable to said piston (110) proximate to said free end (112) and said second hollow cylinder (60) being movable with respect to said first hollow cylinder (40) away from said free end (112) and being lockable with respect to said first hollow cylinder (40), said extraction means (30) further comprising at least one spacer ring (62), which is associated with said second hollow cylinder (60) by means of a screw-and-nut coupling.

5. The device (1) according to one or more of the preceding claims, **characterized in that** it comprises a sliding seat (44), which is defined laterally on said first hollow cylinder (40) and lies substantially parallel to the longitudinal axis of said first hollow cylinder (40) substantially along the entire length of said hollow cylinder (40), being furthermore comprised a plurality of holding seats (45) which are connected to said sliding seat (44) and are defined transversely with respect to said sliding seat (44).

6. The device (1) according to one or more of the preceding claims, **characterized in that** it comprises a holding element (63) which is fixed to said second hollow cylinder (60) and is accommodated slidingly in said sliding seat (44), said holding element (63) being engageable temporarily in at least one of said holding seats (45).

7. The device (1) according to one or more of the preceding claims, **characterized in that** it comprises a handling element (64) which is associated with said spacer ring (62) and is extended radially outward from said spacer ring (62).

8. The device (1) according to one or more of the preceding claims, **characterized in that** said clamping means (3) comprise at least one clamping ring (10), which is defined at least by a first jaw (11) and a second jaw (12) mutually connectable by locking means (13) in diametrically opposite positions with respect to said piston (110).

9. The device (1) according to one or more of the preceding claims, **characterized in that** it comprises contact elements (15) which are associated respectively with said first jaw (11) and said second jaw (12), said contact elements (15) being interposable between said piston (110), said first jaw (11) and said second jaw (12), and being made of an elastically flexible material.

## Patentansprüche

1. Eine Vorrichtung (1) zur Montage von Stoßdämpfern, insbesondere für Stoßdämpfer mit Gasunterstützung, **dadurch gekennzeichnet, dass** sie Greifmittel (2) umfasst, die mit einem freien Ende (112) eines Kolbens (110) verbunden werden können, der verschiebbar in einen Stamm (120) eines Stoßdämpfers (100) eingeführt wird, zum Herausragen des Kolbens (110) aus dem Stamm (120) im Kontrast zur Wirkung der Dämpfungsflüssigkeit, die in dem Stamm (120) enthalten ist, und weiter Mittel (3) zum Klemmen des Kolbens (110) im Verhältnis zu dem Stamm (120) umfassend, eingreifbar in einen Endabschnitt (111) des Kolbens (110), der aus dem Stamm (120) ausgetreten ist, zur erleichterten Montage einer Schraubenfeder (130) an dem Stoßdämpfer (100), wobei der Endabschnitt (111) an dem dem freien Ende (112) gegenüberliegenden Ende geformt ist.

2. Die Vorrichtung (1) gemäß Anspruch 1, **dadurch gekennzeichnet, dass** die Greifmittel (2) mindestens ein Greifelement (4) umfassen, das zum Herausziehen des Kolbens (110) aus dem Stamm (120) zumindest um einen ersten Abschnitt in das freie Ende (112) eingreifen kann.

3. Die Vorrichtung (1) gemäß Anspruch 1 oder 2, **dadurch gekennzeichnet, dass** sie Mittel (30) zum Herausziehen des Kolbens (110) aus dem Stamm (120) zum Herausziehn des Kolbens (110) vom Stamm (120) um mindestens einen zweiten Abschnitt umfasst.

4. Die Vorrichtung (1) gemäß einem oder mehreren der obigen Ansprüche, **dadurch gekennzeichnet, dass** die Extraktionsmittel (30) einen ersten Hohlzylinder (40) und einen zweiten Hohlzylinder (60) umfassen, die übereinander montiert sind und über den Kolben (110) montiert werden können, wobei der erste Hohlzylinder (40) an dem Kolben (110) nahe dem freien Ende (112) befestigt werden kann und der zweite Hohlzylinder (60) mit Bezug auf den ersten Hohlzylinder (40) von dem freien Ende (112) fort bewegt und im Verhältnis zu dem ersten Hohlzylinder (40) blockiert werden kann, wobei die Extraktionsmittel (30) weiter mindestens einen Abstandsring (62) umfassen, der über eine Schrauben-Mutter-Kopplung mit dem zweiten Hohlzylinder (60) verbunden ist.

5. Die Vorrichtung (1) gemäß einem oder mehreren der obigen Ansprüche, **dadurch gekennzeichnet, dass** sie einen Gleitsitz (44) umfasst, der seitlich an dem ersten Hohlzylinder (40) bestimmt ist und im Wesentlichen parallel zur Längsachse des ersten Hohlzylinders (40) im Wesentlichen über der gesamten Länge des Hohlzylinders (40) liegt, wobei weiter eine Vielzahl von Haltesitzen (45) umfasst ist, die mit dem Gleitsitz (44) verbunden und transversal zu dem Gleitsitz (44) geformt sind.

6. Die Vorrichtung (1) gemäß einem oder mehreren der obigen Ansprüche, **dadurch gekennzeichnet, dass** sie ein Halteelement (63) umfasst, das an dem zweiten Hohlzylinder (60) befestigt und verschiebbar in dem Gleitsitz (44) untergebracht ist, wobei das Halteelement (63) vorübergehend in mindestens einen der Haltesitze (45) eingreifen kann.

7. Die Vorrichtung (1) gemäß einem oder mehreren der obigen Ansprüche, **dadurch gekennzeichnet, dass** sie ein Handhabungselement (64) umfasst, das mit dem Abstandsring (62) verbunden und von dem Abstandsring (62) radial nach außen verlängert ist.

8. Die Vorrichtung (1) gemäß einem oder mehreren der obigen Ansprüche, **dadurch gekennzeichnet, dass** die Klemmmittel (3) mindestens einen Klemmring (10) umfassen, der mindestens bestimmt wird durch eine erste Backe (11) und eine zweite Backe (12), die miteinander durch Verriegelungsmittel (13) in diametral gegenüberliegenden Positionen mit Bezug auf den Kolben (110) verbunden werden können.

9. Die Vorrichtung (1) gemäß einem oder mehreren der obigen Ansprüche, **dadurch gekennzeichnet, dass** sie Kontaktelemente (15) umfasst, die mit der ersten Backe (11) beziehungsweise der zweiten Backe (12) verbunden sind, wobei die Kontaktelemente (15) zwischen dem Kolben (110), der ersten Backe (11) und der zweiten Backe (12) angeordnet werden können und aus einem elastisch biegsamen Material bestehen.

## Revendications

1. Dispositif (1) pour assembler des amortisseurs de chocs, en particulier pour des amortisseurs de chocs assistés par un gaz, **caractérisé en ce qu'**il comprend des moyens de saisie (2) pouvant être associés à une extrémité libre (112) d'un piston (110) qui est inséré de façon coulissante dans une tige (120) d'un amortisseurs de chocs (100) pour la saillie dudit piston (110) à partir de ladite tige (120) en contraste avec l'action du fluide d'amortissement contenu dans ladite tige (120), et comprenant de plus des moyens (3) pour serrer ledit piston (110) vis-à-vis de ladite tige (120) pouvant venir en prise avec une partie d'extrémité (111) dudit piston (110) qui est sortie de ladite tige (120) pour le montage facilité d'un ressort hélicoïdal (130) sur ledit amortisseurs de chocs (100), ladite partie d'extrémité (111) étant définie à l'extrémité opposée par rapport à ladite extrémité libre (112).

2. Dispositif (1) selon la revendication 1, **caractérisé en ce que** lesdits moyens de saisie (2) comprennent au moins un élément de saisie (4) pouvant venir en prise avec ladite extrémité libre (112) pour l'extraction dudit piston (110) à partir de ladite tige (120) au moins sur une première partie.

3. Dispositif (1) selon la revendication 1 ou 2, **caractérisé en ce qu'**il comprend des moyens (30) pour extraire ledit piston (110) de ladite tige (120) pour l'extraction dudit piston (110) à partir de ladite tige (120) au moins sur une deuxième partie.

4. Dispositif (1) selon l'une ou plusieurs des revendications précédentes, **caractérisé en ce que** lesdits moyens d'extraction (30) comprennent un premier cylindre creux (40) et un deuxième cylindre creux (60), qui sont adaptés l'un sur l'autre et qui peuvent être disposés sur ledit piston (110), ledit premier cylindre creux (40) pouvant être fixé audit piston (110) à proximité de ladite extrémité libre (112) et ledit deuxième cylindre creux (60) pouvant être mobile par rapport audit premier cylindre creux (40) de façon à s'éloigner de ladite extrémité libre (112) et pouvant être verrouillé par rapport audit premier cylindre creux (40), lesdits moyens d'extraction (30) comprenant de plus au moins une bague d'espacement (62), qui est associée audit deuxième cylindre creux (60) à l'aide d'un accouplement à vis et écrou.

5. Dispositif (1) selon l'une ou plusieurs des revendications précédentes, **caractérisé en ce qu'**il comprend un siège coulissant (44), qui est défini latéralement sur ledit premier cylindre creux (40) et qui repose sensiblement parallèlement à l'axe longitudinal dudit premier cylindre creux (40) sensiblement le long de la totalité de la longueur dudit cylindre creux (40), comportant de plus une pluralité de sièges de support (45) qui sont reliés audit siège coulissant (44) et qui sont définis transversalement par rapport audit siège coulissant (44).

6. Dispositif (1) selon l'une ou plusieurs des revendications précédentes, **caractérisé en ce qu'**il comprend un élément de support (63) qui est fixé audit deuxième cylindre creux (60) et qui est reçu de façon à pouvoir coulisser dans ledit siège coulissant (44), ledit élément de support (63) pouvant venir temporairement en prise dans au moins l'un desdits sièges de support (45).

7. Dispositif (1) selon l'une ou plusieurs des revendications précédentes, **caractérisé en ce qu'**il comprend un élément de manipulation (64) qui est associé à ladite bague d'espacement (62) et qui s'étend radialement vers l'extérieur à partir de ladite bague d'espacement (62).

8. Dispositif (1) selon l'une ou plusieurs des revendications précédentes, **caractérisé en ce que** lesdits moyens de serrage (3) comprennent au moins une bague de serrage (10), qui est définie par au moins une première mâchoire (11) et une deuxième mâchoire (12) pouvant être mutuellement reliées par des moyens de verrouillage (13) dans des position diamétralement opposées vis-à-vis dudit piston (110).

9. Dispositif (1) selon l'une ou plusieurs des revendications précédentes, **caractérisé en ce qu'**il comprend des éléments de contact (15) qui sont associés respectivement à ladite première mâchoire (11) et à ladite deuxième mâchoire (12), lesdits éléments de contact (15) pouvant être interposés entre ledit piston (110), ladite première mâchoire (11) et ladite deuxième mâchoire (12), et étant constitués par un matériau élastiquement souple.
